# EUROPEAN PATENT SPECIFICATION

(11) **EP 3 580 149 B1**
(45) Date of publication and mention of the grant of the patent: **18.10.2023**
(21) Application number: 18751912.9
(22) Date of filing: 16.01.2018
(51) Int. Cl.: B01D 46/16, B01D 46/18, B01D 46/10, B65F 5/00

(54) **AIR FILTRATION**
LUFTFILTERUNG
FILTRATION D'AIR

(30) Priority: 08.02.2017 SE 1750120
(43) Date of publication of application: 18.12.2019
(73) Proprietor: Envac AB, 112 26 Stockholm (SE)
(72) Inventor: HIDALGO CASTADO, Juan José, 28320 Pinto Madrid (ES); NORLENIUS, Tomas, 461 43 Trollhättan (SE)
(74) Representative: AWA Sweden AB
(86) International application number: PCT/SE2018/050034
(87) International publication number: WO 2018/147777

(56) References cited:
- EP-A1- 3 064 736
- WO-A1-2008/007592
- WO-A1-2008/007592
- CN-U- 203 294 809
- CN-U- 203 610 295
- JP-A- S5 574 915
- JP-A- S5 926 562
- JP-A- H07 275 626
- JP-U- H01 156 721

## Description

### TECHNICAL FIELD

The present technology generally relates to vacuum operated waste collection systems and in particular relates to the control and management of the vacuum generating air flow that is evacuated from a waste collection container of such a system.

### BACKGROUND

In a majority of the prior art vacuum operated waste collection systems the subatmospheric pressure used to transport waste from waste deposit points to collection or temporary storage containers is generated by means of fans or blowers. In order to protect the fans, blowers etc. and to secure effective operation thereof, filter units are normally provided inside and/or in immediate association with the container for filtering air evacuated from the container by the fans. The use of such container filter units normally requires that the operation of the entire system is interrupted during cleaning of the filter elements. Cleaning of the filter units is required frequently or at regular intervals since clogged filters cause excessive energy losses or even severe malfunction in the form of stoppage.

JPS5574915A relates to a separation exhauster for an air carrier. The idea is to use only one drive motor by employing a horizontal separation exhauster having a screw conveyor rotatable integrally with rotary drum storage exhauster in separator section thereby reducing the height and bearing. Partitions are provided in separation exhauster to fall down the dust entered through dust entering section. The air is filtered through rotary filter and exhausted through metal mesh in air filter chamber and air outlet. Screw conveyor is placed at the bottom of separation exhauster and fixed rotatably together with rotary drum storage exhauster. The conveyor shaft is driven together with the exhauster by motor through sprocket. Consequently, the height is reduced while the number of bearing is also reduced requiring only one drive motor.

### SUMMARY

It is a general object to provide an improved solution to the above discussed problems.

In particular it is an object to suggest an improved assembly configured to provide both increased user practicality and better air filtering conditions.

These and other objects are met by the technology as defined by the accompanying claims. The technology generally relates to vacuum operated waste collection systems where vacuum air flow is applied through at least parts of the system and the filtering of air evacuated from a system storage container is performed through an air evacuation duct.

In a basic aspect of the technology there is provided an improved assembly for the controlling and filtering of such air flow. In a basic configuration the assembly includes an assembly housing being installed in the air evacuation duct. An inner passage in the assembly housing communicates with the evacuation duct, a control means is installed in the housing with a shiftable member intersecting the inner housing passage, the shiftable member has one or more air filtering elements and the air filtering element(s) is/are movable in a direction generally transversal to the housing inner passage.

There is provided an assembly according to claim 1 for selectively controlling the application of the vacuum air flow through at least parts of the vacuum operated waste collection system. In this further development the shiftable member of the control means is provided with one or more gate portions and a duct blocking portion positioned side by side in the shiftable member. The shiftable member is linearly displaceable in a direction generally transversal to the inner passage in the assembly housing for positioning a selected gate portion or a duct blocking portion in line with and intersecting the inner passage. Advantages offered by the present technology in addition to those described above will be appreciated upon reading the below detailed description of embodiments of the technology.

Preferred further developments of the basic idea of the technology as well as embodiments thereof are indicated in the dependent subclaims.

### BRIEF DESCRIPTION OF THE DRAWINGS

The present technology and its further objects and advantages will be best understood with reference to the following description and the accompanying drawings, on which:
- Fig. 1: is a partial schematic illustration of an air filtering solution of the technology applied to a collection point of a generic vacuum operated waste collection system;
- Fig. 2: is a schematic illustration of a first embodiment of an air filtering assembly of the technology;
- Fig. 3: is a perspective view of a housing of the of air filtering assembly of Fig. 2;
- Fig. 4: is a schematical and partial side view of the air filtering assembly of Fig. 2 with a side wall removed to illustrate the arrangement of the filtering member;
- Fig. 5: is a partial and schematic illustration of a second embodiment of an air control and filtering assembly of the technology;
- Fig. 6: is a plan view of a control means of the air control and filtering assembly of Fig. 5;
- Fig. 7A: is a plan view of the housing of the air control and filtering assembly of Fig. 5;
- Fig. 7B: is an end view of the housing of the air control and filtering assembly of Fig. 5;
- Fig. 8: is a partly schematic illustration of a modified third embodiment of an air control and filtering assembly of the technology;
- Fig. 9: is a likewise partly schematic illustration of a further modified fourth embodiment of an air control and filtering assembly of the technology; and
- Fig. 10: is a very schematic, enlarged illustration of a slightly modified fifth embodiment of the air control and filtering assembly of the technology.

### DETAILED DESCRIPTION

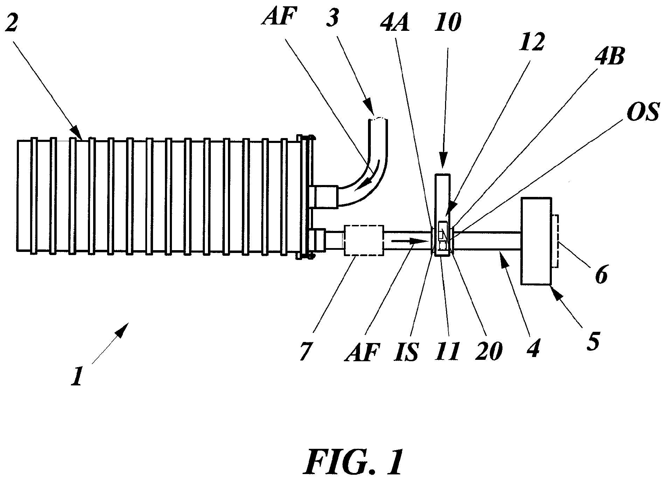

The technology will be described referring to basic and exemplifying embodiments thereof. Said embodiments are illustrated in the accompanying drawing figures 1-10 in order to facilitate understanding of the technology, and relate to an application of the basic solution of the technology to systems and equipment for vacuum operated waste collection. However, it shall be emphasized that all of the illustrations serve the sole purpose of describing presently preferred embodiments of the technology and are in no way intended to restrict the technology to any of the details shown therein.

The general technique of collecting waste material by vacuum air flow has been known for decades and has been used for transporting collected waste material through transport piping and to a collection central being equipped with blowers for generating such vacuum air flow in the transport piping. As was discussed in the introduction, a problem encountered within this technical field has been the filtering of air evacuated from containers by the blowers or fans generating the vacuum air flow. Among other things, the existing solutions suffer from the drawback of requiring that the waste transporting process is interrupted to enable clearing and cleaning of filters.

To overcome such disadvantages and problems that have been encountered within this technical field and that were mentioned above the present technology now suggests a novel approach for optimizing the control and filtering of the vacuum air flow being sucked through the fans. The unique features of the suggested control and filtering assembly provide essential advantages over existing techniques. Said control and filtering assembly enables uninterrupted waste material transport even during clearing and/or cleaning of filters. It also provides further advantages such as improved and extended possibility of controlling the application of the vacuum air flow by serving as a main air valve. Expressed otherwise, the suggested technology at least reduces the drawbacks of the prior art solutions in a vacuum operated waste collection system. It provides efficient and improved control of the application of vacuum creating air flow through parts of the system and of the filtering of air evacuated from a system storage container. It further provides an improved and cost effective filtering of consumed air of a vacuum waste collection system.

The present technology will now be explained with reference to exemplifying embodiments that are illustrated in accompanying drawing figures 1-10. Fig. 1 very schematically illustrates an exemplary embodiment of a basic configuration of the present technology as applied to a schematically and partially shown universal type of vacuum operated waste collection system 1, such as those used for collecting residential waste or refuse. In such systems waste material is collected at separate waste introduction points (such as waste inlets, not illustrated here) and is transported by vacuum air flow AF through transport piping 3 and to a system storage container 2. The vacuum air flow AF is generated by at least one fan or blower 5 and is applied through at least parts of the system. Specifically, in this case the at least one fan or blower is connected to the system storage container 2 through an air evacuation duct 4 to evacuate air therefrom. As is illustrated in Fig. 1 a silencer 7 is normally incorporated in the air evacuation duct 4 and an odor filter 6 may be associated with an exhaust side of the fan or blower 5.

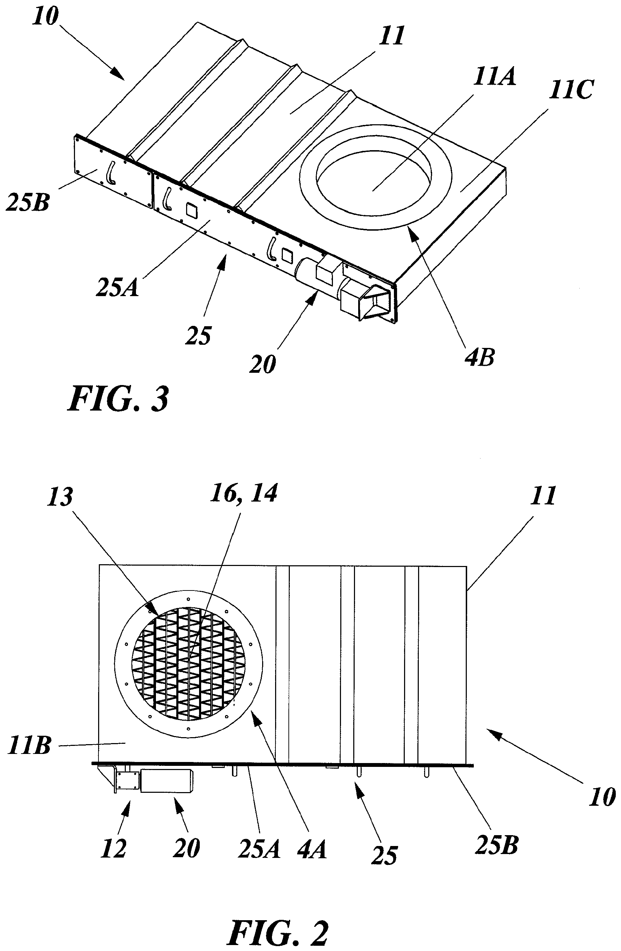

In the air evacuation duct 4 is provided an assembly 10 for filtering the vacuum air flow AF that is evacuated from the system storage container 2 through said air evacuation duct 4. In such vacuum operated waste collection systems 1 air filters may, as mentioned, normally be integrated in the containers 2 or, as illustrated in Fig. 1, be provided between a system storage container 2 and one or more fans 5 in order to protect the fans. With specific reference to Figs. 2 - 4 the present technology in the basic configuration proposes providing an improved assembly 10 for controlling filtering of a vacuum air flow AF evacuated from a system storage container 2. This assembly 10 includes an assembly housing 11 that may have the illustrated generally hollow box-shape and is installed stationary in the air evacuation duct 4.

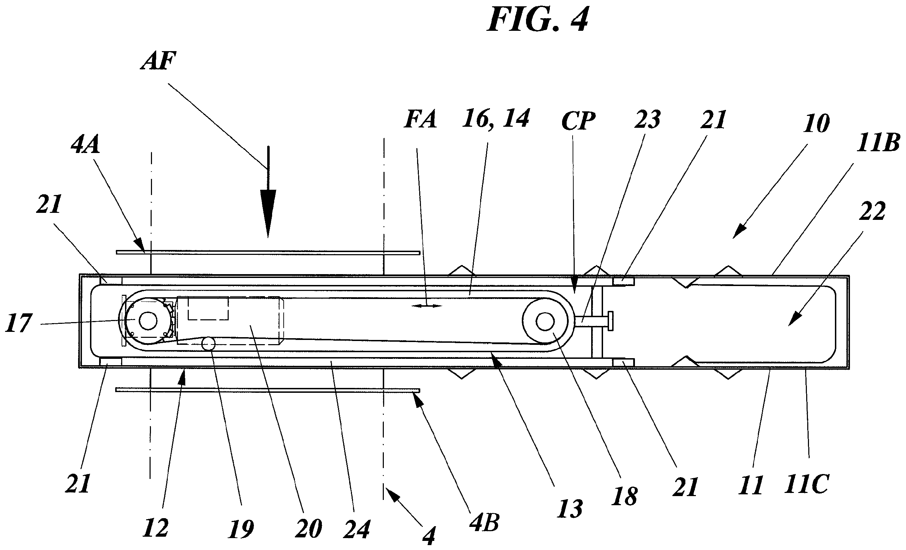

The assembly housing 11 has an inner passage 11A that communicates with the air evacuation duct 4 by being connected thereto by connection flanges 4A, 4B that are in turn attached to opposite flat sides 11B, 11C of the assembly housing 11. In the assembly housing 11 is installed a control means 12 that is shown in Figs. 2 and 4 and that for clarity has been removed from the illustration in Fig. 3. The control means 12 primarily includes a shiftable member 13 intersecting the assembly housing 11 inner passage 11A. In this embodiment the shiftable member 13 has an air filtering element 16 that is movable in a direction FA being generally transversal to the inner passage 11A in the assembly housing 11. Thus, the air filtering element 16 of the shiftable member 13 is movable across the inner passage 11A in the assembly housing 11, continuously completely covering said inner passage.

In this first embodiment the air filtering element 16 of the shiftable member 13 consists of a grille or grate mesh belting 14 that is illustrated in an exemplifying configuration in Figs. 2 and 4. It shall be indicated though, that the air filtering element 16 and/or the grate mesh belting 14 may be of any appropriate type and configuration. The grate mesh belting 14 is continuously movable by a preferably electrical drive motor 20 in a loop inside a filtering section 24 (Fig. 4) supported in the hollow assembly housing 11 by mounting guides 21. Specifically the grate mesh belting 14 is arranged to be rotated by drive motor 20 in a loop around spaced pairs of sprocket or drive wheels 17, guide wheels 18 and tension rollers 19.

The assembly housing 11 further includes a dirt storage section 22 and a cleaning system comprising a set of brushes 23 that engage the grate mesh belting 14 at a cleaning position CP adjacent to the dirt storage section 22. Said brushes 23 serve to brush dirt from the continuously or selectively rotating grate mesh belting 14 of the shiftable member 13 air filtering element 16 and into the dirt storage section 22. As will be seen in Figs. 2 and 3 the assembly housing 11 includes also a cleaning hatch 25 consisting of a removable first hatch portion 25A covering a side of the assembly housing 11 filtering section 24 and a removable second hatch portion 25B covering a side of the assembly housing 11 dirt storage section 22. The first hatch portion 25A may be removed to access and possibly completely remove the shiftable member 13 and its grate mesh belting 14 in situations when it may necessary to perform an exhaustive cleaning. Likewise, the second hatch portion 25B may be removed in order to allow cleaning out dirt collected in the dirt storage section 22.

It will be realized that this new technology will provide a self-cleaning air filter assembly 10 that depending upon the circumstances, such as the amount of dirt present in the evacuated air flow AF and/or the frequency of the operation of the fans or blowers 5, will be activated continuously or in dependency of the running of the system 1 and its fans or blowers 5. This self-cleaning action will enable a lowering of the energy losses otherwise caused by occluded filters etc. and will additionally reduce the risks of stoppage or malfunctions in the system caused by heavily occluded filter equipment.

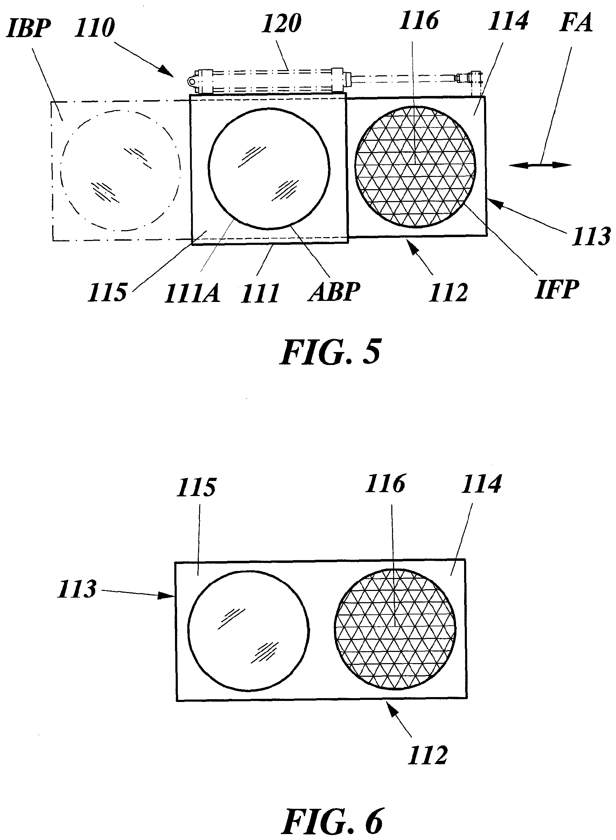

With reference to Figs. 5-10 further embodiments of the present technology will now be described and explained, wherein provisions have been made for additionally selectively controlling the application of a vacuum air flow AF through at least parts of the vacuum operated waste collection system 1. In Figs. 5-7B is illustrated a second embodiment of an assembly 110 that has this further feature by enabling controlling the actual evacuation of vacuum air flow AF from the system storage container 2. Here the assembly housing 111 likewise has a generally hollow box-shape with both ends open so that the assembly housing 111 has an open interior forming a later described housing guide channel 111B. The assembly housing 111 is like by the first embodiment installed stationary in the air evacuation duct 4. This assembly housing 111 also has an inner passage 111A communicating with the air evacuation duct 4. The assembly housing 111 is preferably connected to the air evacuation duct 4 as described above, by connection flanges, not specifically illustrated here, that are likewise attached to opposite flat sides of the assembly housing 111. In this embodiment the assembly housing 111 displaceably receives a control means 112 that primarily includes a shiftable member 113 in the form of a kind of valve slide intersecting the assembly housing 111 inner passage 111A. The shiftable member 113 of the assembly 110 has one gate portion 114 having an air filtering element 116 and one duct blocking portion 115.

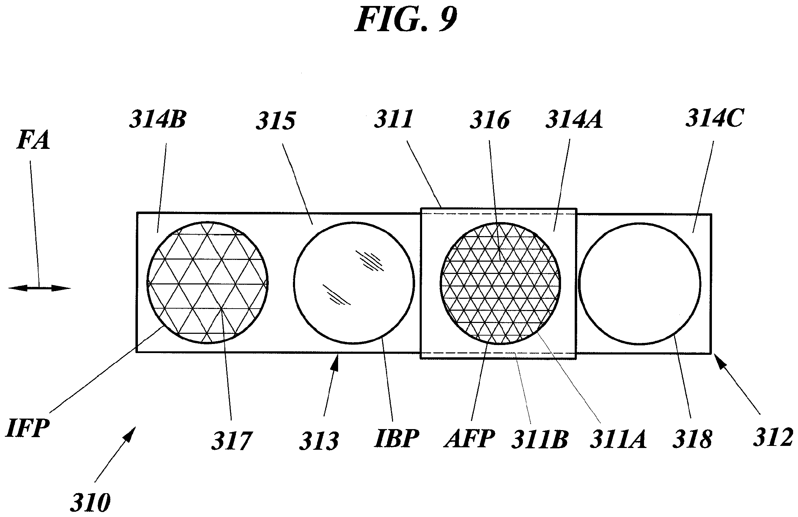

The gate 114 and duct blocking 115 portions are positioned side by side in the shiftable member 113 of the control means 112. The shiftable member 113 is linearly displaceable inside the open interior of the assembly housing 111 and in a direction FA generally transversal to the inner housing passage 111A. This will allow for positioning either the gate portion 114 or the duct blocking portion 115 in line with and intersecting the inner passage 11A in the assembly housing 111. The assembly 111 of the second embodiment is equipped with an actuator 120, e.g. a fluid cylinder, for selectively displacing the shiftable member 113 to selected positions in the assembly housing 111. The shiftable member 113 is thus movable so as to position its gate 114 and duct blocking portions 115 in active AFP and ABP, respectively, and inactive IFP and IBP, respectively, positions. It will be realized that the housing guide channel 111B serves to displaceably receive and guide the shiftable member 113 therein. Likewise, it will be realized that the vacuum air flow AF is continuously filtered in the active filter position AFP, see Fig. 9, (corresponds to the inactive blocking position IBP) whereas it is completely blocked in the active blocking position ABP (corresponds to the inactive filtering position IFP).

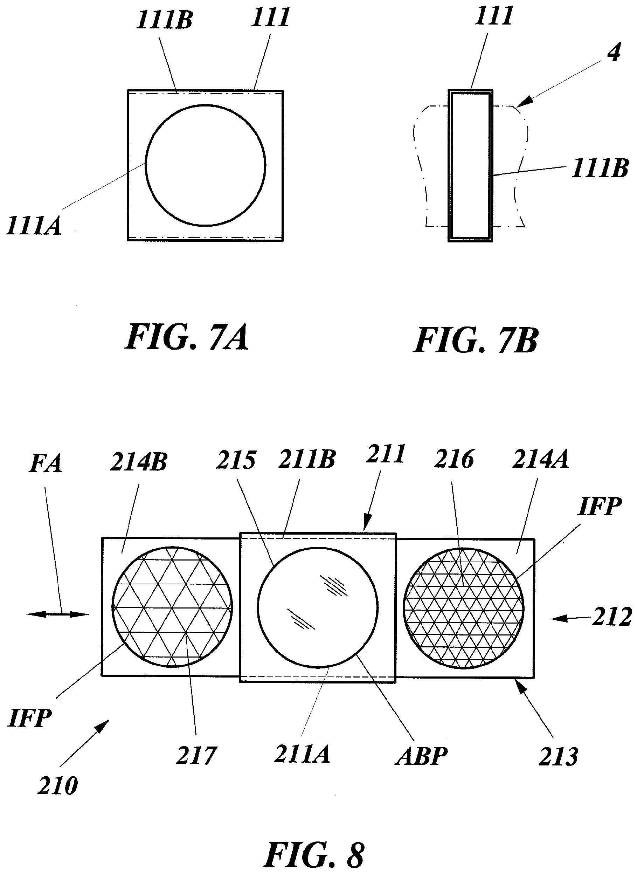

In Fig. 8 is illustrated a third embodiment of the technology. The assembly 210 of this embodiment is very similar to that of the second embodiment, and the main difference is that here the assembly 210 includes a control means 212 with a shiftable member 213 that in this case has two gate portions 214A-B. The two gate portions 214A and 214B are positioned on either side of the blocking portion 215 and have filtering elements 216, 217 of different filter mesh size. Like before, the shiftable member 213 is displaceably received in a housing guide channel 211B in the assembly housing 211. It is linearly displaceable in a direction FA being generally transversal to an inner housing passage 211A in the assembly housing 211 for positioning a selected gate portion 214A-B or a duct blocking portion 215 in line with and intersecting the inner passage 211A in the assembly housing 211. In this embodiment the vacuum air flow AF may thus be controlled by either being blocked by the duct blocking portion 215 of the shiftable member 213 or being filtered in two different levels of filtering by its different filtering elements 216, 217.

A further variant of the assembly 310 of the technology is illustrated in Fig. 9. This fourth embodiment is again based on the second embodiment of Figs. 5-7B. Thus, it again includes a shiftable member 313 being linearly displaceable back and forth in a direction FA generally transversal to an inner housing passage 311A for positioning selected gate portions 314A-C or a duct blocking portion 315 in line with and intersecting the inner passage 311A in the assembly housing 311. Here too the shiftable member 313 of the control means 312 is guided in a housing guide channel 311B of the assembly housing 311 for displaceably receiving the shiftable member 313 therein. In this embodiment of the assembly 310, the shiftable member 313 of the control means 312 has three gate portions 314A-C and one duct blocking 315 portion positioned side by side in the control means 312 shiftable member 313. The shiftable member 313 in this case has one fully open gate portion 314C with a passage element 318 performing no blocking or filtering action in addition to the two gate portions 314A, 314B having filtering elements 316, 317 of different filter mesh size, like in the third embodiment of Fig. 8.

It shall be understood that although not specifically shown in the drawings both of the above described third and fourth embodiments employ appropriate actuators for selectively displacing the shiftable members of the control means to selected positions with its gate portions and duct blocking portion.

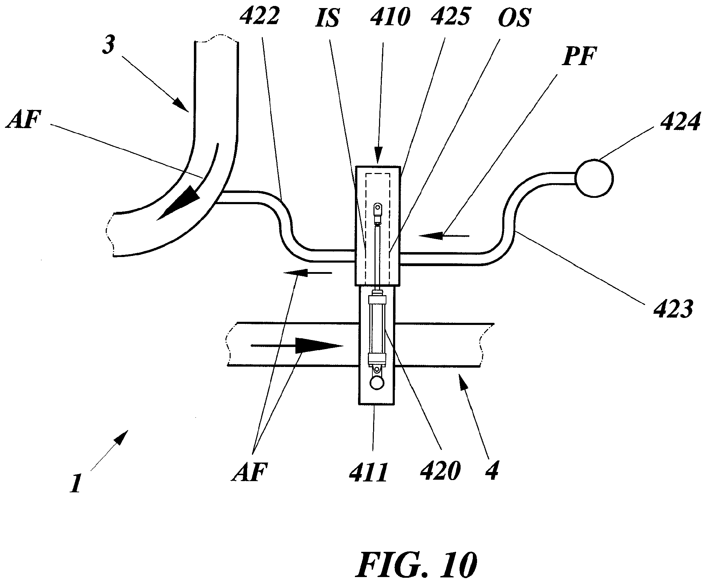

In Fig. 10 is finally shown a fifth embodiment of an assembly 410 of a general type described above for the second to fourth embodiments, but additionally including cleaning means 422-425 for cleaning a gate portion of the control means (not specifically shown) in an inactive filtering position thereof. Said cleaning means comprises an air pipe 422 that connects a system transport vacuum duct 3 upstream of the container 2 with an inflow side IS of a respective gate portion of a filtering element. This air pipe 422 is employed for applying system vacuum air flow AF to the assembly 410 to clean its filtering elements when needed. The vacuum air flow is specifically applied to said inflow side of the respective air filtering element in said inactive filtering position thereof.

The cleaning means 422-425 also or additionally comprises a pipe 423 connecting a pressurized fluid source 424 with an outflow side OS of the respective gate portion filtering element for applying pressurized fluid flow PF to said outflow side of the respective filtering element in said inactive filtering position thereof. Finally, a cleaning box 425 may also be provided surrounding and essentially sealing the respective gate portion of the control means air filtering element in its inactive filtering position.

In further alternative but not specifically illustrated embodiments of the technology variations of the different illustrated parts of the assembly and its control means may be employed without departing from the scope of the technology. An example of this is different designs of details of filtering elements described herein. Likewise, it shall also be emphasized that although the technology has been described and illustrated with specific reference to an application in a vacuum operated waste collection system the technology is in no way restricted to such applications. The basic principles of the technology may with minor modifications be applied to or transferred also to various other kinds of vacuum operated material transport systems.

The present technology has been described in connection with embodiments that are to be regarded as illustrative examples thereof. It will be understood by those skilled in the art that the present technology is not limited to the disclosed embodiments but is intended to cover various modifications and equivalent arrangements. The technology likewise covers any feasible combination of features described and illustrated herein. The scope of the present technology is defined by the appended claims.

## Claims

1. An assembly (10; 110; 210; 310; 410) for controlling filtering of a vacuum air flow (AF) evacuated from a system storage container (2) through an air evacuation duct (4) in vacuum operated waste collection systems (1), wherein said assembly comprises:
- an assembly housing (11; 111; 211; 311; 411) installed stationary in the air evacuation duct;
- an inner passage (11A; 111A; 311A) in the assembly housing, communicating with the air evacuation duct;
- a control means (12; 112; 212; 313) installed in the assembly housing and including a shiftable member (13; 113; 213; 313) intersecting the inner passage in the housing;
- the shiftable member having one or more air filtering elements (16; 116; 216, 217; 316, 317); and
- the air filtering element(s) being movable in a direction being generally transversal to the inner passage (11A; 111A; 311A) in the assembly housing,
**characterized in that** the shiftable member (113; 213; 313) has one or more gate portions (114A-B; 214A-B; 314A-C) and one duct blocking portion (115; 215; 315); and the shiftable member including at least one gate portion (114; 214A-B; 314A-C) having an air filtering element (116, 117; 216, 217; 316, 317).

2. An assembly (10) according to claim 1, **characterized in that** an air filtering element (16) of the shiftable member (13) is movable across the inner passage (11A) in the assembly housing (11), continuously completely covering said inner passage.

3. An assembly (10) according to claim 2, **characterized in that** the air filtering element (16) of the shiftable member (13) consists of a grate mesh belting (14) being continuously movable by a drive motor (20) in a loop around spaced pairs of sprocket wheels (17), guide wheels (18) and tension rollers (19).

4. An assembly (10) according to claim 3, **characterized in that** the assembly housing (11) includes a dirt storage section (22) and a set of brushes (23) engaging the grate mesh belting (14) at a cleaning position (CP) adjacent to the dirt storage section (22), and serving to brush dirt from the grate mesh belting (14) of the shiftable member (13) air filtering element (16) and into the dirt storage section.

5. An assembly (110; 210; 310) according to claim 1 for additionally selectively controlling the application of the vacuum air flow (AF) through at least parts of the vacuum operated waste collection systems (1), **characterized in that** the gate portions (114; 214A-B; 314A-C) and duct blocking (115; 215; 315) portions are positioned side by side in the control means (112; 212; 312) shiftable member (113; 213; 313) and that the shiftable member is linearly displaceable in a direction (FA) generally transversal to the inner housing passage (111A; 211A; 311A) for positioning a selected gate portion (114; 214A-B; 314A-C) or a duct blocking portion (115; 215; 315) in line with and intersecting the inner passage (11A; 111A; 311A) in the assembly housing (111; 211; 311).

6. An assembly (410) according to claim 1 or 5, **characterized by** means (422; 423, 424; 425) for cleaning a gate portion (114; 214A-B; 314A-C) in an inactive filtering position (IFP) thereof and in that said means for cleaning comprises a line (422) connecting a system transport vacuum duct (3) upstream of the container (2) with an inflow side (IS) of the respective gate portion (114; 214A-B; 314A-C) filtering element (116, 117; 216, 217; 316, 317) for applying system vacuum air flow (AF) to said side of the respective air filtering element in said inactive filtering position (IFP) thereof.

7. An assembly (410) according to claim 6, **characterized in that** said means (422; 423, 424; 425) for cleaning a gate portion (114; 214A-B; 314A-C) in an inactive filtering position (IFP) thereof comprises or additionally comprises a line (423) connecting a pressurized fluid source (424) with an outflow side (OS) of the respective gate portion (114; 214A-B; 314A-C) filtering element (116, 117; 216, 217; 316, 317) for applying pressurized fluid flow (PF) to said side of the respective filtering element in said inactive filtering position (IFP) thereof.

8. An assembly (110; 210; 310; 420) according to claim 1, **characterized by** at least one actuator (120; 420) for selectively displacing the shiftable member (113; 213; 313) to selected positions with its gate portions (14; 114A-B; 214A-C) and duct blocking portion (13; 113; 213) in active (AFP and ABP, respectively) and inactive (IFP and IBP, respectively) positions and by a housing guide channel (111B; 211B; 311B) for displaceably receiving and guiding the shiftable member (113; 213; 313) therein.

9. An assembly (310) according to claim 1, **characterized in that** the shiftable member (313) has a fully open gate portion (314C) with a passage element (318) performing no blocking or filtering action.

10. An assembly (210; 310) according to claim 1, **characterized in that** the shiftable member (213; 313) has several gate portions (214A-B; 314A-B) with filtering elements (216, 217; 316, 317) of different filter mesh size.

## Patentansprüche

1. Anordnung (10; 110; 210; 310; 410) zur Steuerung der Filterung eines Vakuumluftstroms (AF), der aus einem Systemlagerbehälter (2) durch einen Luftableitungskanal (4) in vakuumbetriebenen Abfallsammelsystemen (1) abgeleitet wird, wobei die Anordnung umfasst:
- ein Anordnungsgehäuse (11; 111; 211; 311; 411), das ortsfest im Luftableitungskanal installiert ist;
- einen inneren Durchgang (11A; 111A; 311A) in dem Anordnungsgehäuse, der mit dem Luftableitungskanal in Verbindung steht;
- ein Steuerungsmittel (12; 112; 212; 313), das in dem Anordnungsgehäuse installiert ist und ein verschiebbares Element (13; 113; 213; 313) enthält, das den inneren Durchgang in dem Gehäuse schneidet;
- wobei das verschiebbare Element ein oder mehrere Luftfilterelemente (16; 116; 216, 217; 316, 317) aufweist; und
- wobei das (die) Luftfilterelement(e) in einer Richtung beweglich ist (sind), die im Allgemeinen quer zu dem inneren Durchgang (11A; 111A; 311A) in dem Anordnungsgehäuse verläuft,
**dadurch gekennzeichnet, dass** das verschiebbare Element (113; 213; 313) einen oder mehrere Schieberabschnitte (114A-B; 214A-B; 314A-C) und einen Kanalsperrabschnitt (115; 215; 315) aufweist; und das verschiebbare Element mindestens einen Schieberabschnitt (114; 214A-B; 314A-C) mit einem Luftfilterelement (116, 117; 216, 217; 316, 317) umfasst.

2. Anordnung (10) nach Anspruch 1, **dadurch gekennzeichnet, dass** ein Luftfilterelement (16) des verschiebbaren Elements (13) über den inneren Durchgang (11A) im Anordnungsgehäuse (11) bewegbar ist und den inneren Durchgang kontinuierlich vollständig abdeckt.

3. Anordnung (10) nach Anspruch 2, **dadurch gekennzeichnet, dass** das Luftfilterelement (16) des verschiebbaren Elements (13) aus einem Gittermaschenband (14) besteht, das von einem Antriebsmotor (20) kontinuierlich in einer Schleife um beabstandete Paare von Kettenrollen (17), Führungsrollen (18) und Spannrollen (19) bewegt wird.

4. Anordnung (10) nach Anspruch 3, **dadurch gekennzeichnet, dass** das Anordnungsgehäuse (11) einen Schmutzlagerabschnitt (22) und einen Satz von Bürsten (23) aufweist, die an einer Reinigungsposition (CP) neben dem Schmutzlagerabschnitt (22) an dem Gittermaschenband (14) angreifen und dazu dienen, Schmutz von dem Gittermaschenband (14) des Luftfilterelements (16) des verschiebbaren Elements (13) in den Schmutzlagerabschnitt zu bürsten.

5. Anordnung (110; 210; 310) nach Anspruch 1 zur zusätzlichen selektiven Steuerung der Anlegung des Vakuumluftstroms (AF) durch mindestens Teile der vakuumbetriebenen Abfallsammelsysteme (1), **dadurch gekennzeichnet, dass** die Schieberabschnitte (114; 214A-B; 314A-C) und die Kanalsperrabschnitte (115; 215; 315) nebeneinander in dem verschiebbaren Element (113; 213; 313) des Steuerungsmittels (112; 212; 312) positioniert sind und dass das verschiebbare Element in einer Richtung (FA) linear verschiebbar ist, die im Allgemeinen quer zum inneren Gehäusedurchgang (111A; 211A; 311A) verläuft, um einen ausgewählten Schieberabschnitt (114; 214A-B; 314A-C) oder einen Kanalsperrabschnitt (115; 215; 315) in einer Linie mit dem inneren Durchgang (11A; 111A; 311A) in dem Anordnungsgehäuse (111; 211; 311) und diesen schneidend zu positionieren.

6. Anordnung (410) nach Anspruch 1 oder 5, **gekennzeichnet durch** Mittel (422; 423, 424; 425) zum Reinigen eines Schieberabschnitts (114; 214A-B; 314A-C) in einer inaktiven Filterposition (IFP) desselben und **dadurch, dass** das Mittel zum Reinigen eine Leitung (422) umfasst, die einen Systemtransportvakuumkanal (3) stromaufwärts des Behälters (2) mit einer Anströmseite (IS) des jeweiligen Schieberabschnitt(114; 214A-B; 314A-C)-Filterelements (116, 117; 216, 217; 316, 317) verbindet, um einen Systemvakuumluftstrom (AF) an die Seite des jeweiligen Luftfilterelements in dessen inaktiver Filterposition (IFP) anzulegen.

7. Anordnung (410) nach Anspruch 6, **dadurch gekennzeichnet, dass** die Mittel (422; 423, 424; 425) zum Reinigen eines Schieberabschnitts (114; 214A-B; 314A-C) in einer inaktiven Filterposition (IFP) desselben eine Leitung (423) umfassen oder zusätzlich umfassen, die eine Druckfluidquelle (424) mit einer Abströmseite (OS) des jeweiligen Schieberabschnitt(114; 214A-B; 314A-C)-Filterelements (116, 117; 216, 217; 316, 317) verbindet, um einen Druckfluidstrom (PF) an die Seite des jeweiligen Filterelements in dessen inaktiver Filterposition (IFP) anzulegen.

8. Anordnung (110; 210; 310; 420) nach Anspruch 1, **gekennzeichnet durch** mindestens einen Aktuator (120; 420) zum selektiven Verlagern des verschiebbaren Elements (113; 213; 313) in ausgewählte Positionen, wobei sich seine Schieberabschnitte (14; 114A-B; 214A-C) und der Kanalsperrabschnitt (13; 113; 213) in aktiven (AFP bzw. ABP) und inaktiven (IFP bzw. IBP) Positionen befinden, und durch einen Gehäuseführungskanal (111B; 211B; 311B) zum verlagerbaren Aufnehmen und Führen des verschiebbaren Elements (113; 213; 313) darin.

9. Anordnung (310) nach Anspruch 1, **dadurch gekennzeichnet, dass** das verschiebbare Element (313) einen vollständig geöffneten Schieberabschnitt (314C) mit einem Durchgangselement (318) aufweist, das keine blockierende oder filternde Wirkung hat.

10. Anordnung (210; 310) nach Anspruch 1, **dadurch gekennzeichnet, dass** das verschiebbare Element (213; 313) mehrere Schieberabschnitte (214A-B; 314A-B) mit Filterelementen (216, 217; 316, 317) unterschiedlicher Filtermaschengröße aufweist.

## Revendications

1. Ensemble (10 ; 110 ; 210 ; 310 ; 410) permettant de contrôler le filtrage d'un flux d'air sous vide (AF) évacué depuis un conteneur de stockage (2) à travers un conduit d'évacuation d'air (4) dans des systèmes de collecte de déchets fonctionnant sous vide (1), dans lequel ledit ensemble comprend :
- un boîtier d'assemblage (11 ; 111 ; 211 ; 311 ; 411) installé de manière fixe dans le conduit d'évacuation d'air ;
- un passage intérieur (11A ; 111A ; 311A) dans le boîtier d'assemblage, communiquant avec le conduit d'évacuation d'air ;
- un moyen de commande (12 ; 112 ; 212 ; 313) installé dans le boîtier de l'ensemble et comprenant un élément déplaçable (13 ; 113 ; 213 ; 313) coupant le passage intérieur dans le boîtier ;
- l'élément déplaçable comporte un ou plusieurs éléments de filtrage de l'air (16 ; 116 ; 216, 217 ; 316, 317) ; et
- le ou les éléments de filtrage de l'air sont mobiles dans une direction généralement transversale au passage intérieur (11A ; 111A ; 311A) dans le boîtier de l'ensemble,
**caractérisé en ce que** l'élément déplaçable (113 ; 213 ; 313) comporte une ou plusieurs parties d'obturateur (114A-B ; 214A-B ; 314A-C) et une partie de blocage de conduit (115 ; 215 ; 315) ; et l'élément déplaçable comportant au moins une partie d'obturateur (114 ; 214A-B ; 314A-C) ayant un élément de filtrage d'air (116, 117 ; 216, 217 ; 316, 317).

2. Ensemble (10) selon la revendication 1, **caractérisé en ce qu'**un élément de filtrage de l'air (16) de l'élément déplaçable (13) est mobile à travers le passage intérieur (11A) dans le boîtier de l'ensemble (11), couvrant continuellement et complètement ledit passage intérieur.

3. Ensemble (10) selon la revendication 2, **caractérisé en ce que** l'élément de filtrage de l'air (16) de l'élément déplaçable (13) consiste en une courroie à mailles en grille (14) déplacée de manière continue par un moteur d'entraînement (20) dans une boucle autour de paires espacées de roues dentées (17), de roues de guidage (18) et de rouleaux de tension (19).

4. Ensemble (10) selon la revendication 3, **caractérisé en ce que** le boîtier de l'ensemble (11) comprend une section de stockage de la saleté (22) et un ensemble de brosses (23) engagées dans la courroie à mailles en grille (14) à une position de nettoyage (CP) adjacente à la section de stockage de la saleté (22), et servant à brosser la saleté de la courroie à mailles en grille (14) de l'élément de filtrage de l'air (16) de l'élément déplaçable (13) et dans la section de stockage de la saleté.

5. Ensemble (110 ; 210 ; 310) selon la revendication 1 permettant de contrôler sélectivement l'application du flux d'air sous vide (AF) à travers au moins des parties des systèmes de collecte des déchets fonctionnant sous vide (1), **caractérisé en ce que** les parties d'obturateur (114 ; 214A-B ; 314A-C) et les parties de blocage de conduit (115 ; 215 ; 315) sont positionnées côte à côte dans l'élément déplaçable (113 ; 213 ; 313) du moyen de commande (112 ; 212 ; 312) et que l'élément déplaçable peut être déplacé linéairement dans une direction (FA) généralement transversale au passage intérieur du boîtier (111A ; 211A ; 311A) pour positionner une portion d'obturateur sélectionnée (114 ; 214A-B ; 314A-C) ou une portion de blocage de conduit (115 ; 215 ; 315) en ligne avec le passage intérieur (111A; 111A ; 311A) dans le boîtier d'assemblage (111 ; 211 ; 311) et à l'intersection de celui-ci.

6. Ensemble (410) selon la revendication 1 ou la revendication 5, **caractérisé par** des moyens (422 ; 423, 424 ; 425) pour nettoyer une partie d'obturateur (114 ; 214A-B ; 314A-C) dans une position de filtrage inactive (IFP) de celle-ci et en ce que lesdits moyens de nettoyage comprennent une ligne (422) reliant un conduit de vide de transport de système (3) en amont du conteneur (2) avec un côté d'entrée (IS) de l'élément de filtrage (116, 117 ; 216, 217 ; 316, 317) de la partie d'obturateur respective (114 ; 214A-B ; 314A-C) pour appliquer un flux d'air de vide du système (AF) sur ledit côté de l'élément de filtrage d'air respectif dans ladite position de filtrage inactive (IFP) de celui-ci.

7. Ensemble (410) selon la revendication 6, **caractérisé en ce que** ledit moyen (422 ; 423, 424 ; 425) permettant de nettoyer une portion d'obturateur (114 ; 214A-B ; 314A-C) dans une position de filtrage inactive (IFP) de celle-ci comprend ou comprend en outre une conduite (423) reliant une source de fluide pressurisé (424) avec un côté d'écoulement (OS) de l'élément filtrant (116, 117 ; 216, 217 ; 316, 317) respective de la portion d'obturateur (114 ; 214A-B ; 314A-C) pour appliquer un écoulement de fluide pressurisé (PF) sur ledit côté de l'élément de filtrage respectif dans ladite position de filtrage inactive (IFP) de celle-ci.

8. Ensemble (110 ; 210 ; 310 ; 420) selon la revendication 1, **caractérisé par** au moins un actionneur (120 ; 420) permettant de déplacer de manière sélective l'élément déplaçable (113 ; 213 ; 313) vers des positions sélectionnées avec ses parties d'obturateur (14 ; 114A-B ; 214A-C) et la portion de blocage du conduit (13 ; 113 ; 213) dans des positions actives (AFP et ABP, respectivement) et inactives (IFP et IBP, respectivement) et au moyen d'un canal de guidage du boîtier (111B ; 211B ; 311B) pour recevoir et guider de manière déplaçable l'élément déplaçable (113 ; 213 ; 313) à l'intérieur.

9. Ensemble (310) selon la revendication 1, **caractérisé en ce que** l'élément déplaçable (313) comporte une partie d'ouverture totale (314C) avec un élément de passage (318) n'effectuant aucune action de blocage ou de filtrage.

10. Ensemble (210 ; 310) selon la revendication 1, **caractérisé en ce que** l'élément déplaçable (213 ; 313) comporte plusieurs parties d'obturateur (214A-B ; 314A-B) avec des éléments de filtrage (216, 217 ; 316, 317) d'une taille de maille de filtre différente.
